# FASCICULE DE BREVET EUROPEEN

(11) **EP 4 043 198 B1**
(45) Date de publication et mention de la délivrance du brevet: **28.08.2024**
(21) Numéro de dépôt: 22154764.9
(22) Date de dépôt: 02.02.2022
(51) Int. Cl.: B32B 1/08, B32B 3/04, B32B 3/10, B32B 3/14, B32B 3/16, B32B 5/08, B32B 5/12, B32B 5/26, B32B 7/05, B32B 7/12, B32B 19/02

(54) **BANDE MULTICOUCHE MULTI MATÉRIAUX POUR BOBINAGE**
MEHRSCHICHTIGES BAND AUS MEHREREN MATERIALIEN ZUM AUFWICKELN
MULTILAYER STRIP WITH MULTIPLE MATERIALS FOR WINDING

(30) Priorité: 11.02.2021 FR 2101309
(43) Date de publication de la demande: 17.08.2022
(73) Titulaire: ArianeGroup SAS, 78130 Les Mureaux (FR)
(72) Inventeur: PAGES-XATART, Guillaume, 33185 Le Haillan (FR)
(74) Mandataire: Cabinet Beau de Loménie

(56) Documents cités:
- EP-A1- 3 418 046
- FR-A1- 2 962 933
- US-A1- 2019 276 616

## Description

### Domaine Technique

La présente invention se rapporte au domaine général des procédés de fabrication de pièces en matériau composite multi matériaux mettant en oeuvre notamment le bobinage de bandes de tissu pré-imprégnées.

### Technique antérieure

Les pièces de protection thermique de type ablatif sont des pièces de révolution en matériau composite, pouvant comprendre des couches de protection réalisées avec des matériaux différents. Chaque matériau utilisé présente des caractéristiques propres adaptées aux sollicitations locales, augmentant ainsi les performances de la pièce.

La fabrication de ces pièces nécessite généralement plusieurs étapes, comprenant la réalisation d'une première couche de protection, par exemple en carbone, un traitement autoclave, un usinage de ladite couche et la réalisation d'une deuxième couche, par exemple en verre ou en silice. Les couches de protection peuvent par exemple être réalisées par bobinage, méthode adaptée aux pièces de révolution. Un tel procédé est notamment décrit dans le document US4621662A pour le cas de pièces de révolutions développables et dans le document US2019160760A1 notamment pour le cas de pièces de révolution non-développables. Les bandes utilisées pour le bobinage peuvent être préassemblées sous forme de bandes multicouches avant d'être bobinées afin de réduire fortement les temps de l'opération de bobinage. De telles bandes sont décrites dans le document EP3418046B1.

Cet enchaînement d'opérations conduit à des pièces coûteuses qui sont longues et complexes à réaliser. En outre, l'épaisseur des deux couches de protection étant importante, les performances du moteur sont réduites du fait de l'augmentation de la masse et de l'encombrement. Pour résoudre cette problématique, il est possible de procéder à un drapage alternatif de strates de matériaux différents. Ce procédé permet d'obtenir deux couches de protection assez fines, superposées en partie, chacune réalisée dans un matériau différent. Un tel procédé est décrit dans le document US7550186.

Cependant, ce procédé de drapage alternatif conserve plusieurs inconvénients. En effet, la définition, le découpage et le drapage des strates demeurent complexes à mettre en oeuvre, notamment pour assurer une jonction correcte des strates. Des usinages longs et délicats doivent également être effectués. Ainsi, ce procédé n'est adapté qu'à certaines pièces de faible complexité. Enfin, la pièce finale obtenue par ce procédé de drapage n'est pas orthotrope.

### Exposé de l'invention

La présente invention a pour but de remédier aux inconvénients précités et de proposer une solution qui permet de réaliser des pièces en matériau composite comprenant des couches réalisées avec des matériaux différents, par exemple des pièces de protection thermique de type ablatif.

A cet effet, l'invention propose, selon un premier aspect, une bande multicouche destinée à être bobinée sur une forme pour la fabrication d'une pièce en matériau composite, comprenant des couches fibreuses superposées dont au moins une de ces couches est pré-imprégnée, lesdites couches fibreuses superposées comprenant au moins :
- une première couche comprenant un premier matériau sur un premier côté de la largeur et un deuxième matériau, différent du premier matériau, sur un deuxième côté de la largeur de la bande, opposé au premier côté, et
- une deuxième couche superposée à la première couche comprenant le premier matériau sur le premier côté et le deuxième matériau sur le deuxième côté, avec recouvrement d'un matériau de la deuxième couche avec un matériau différent de la première couche.

Par « premier côté », on entend une portion de la largeur de la bande qui comprend un premier bord longitudinal de la bande. Par « deuxième côté », on entend une portion de la largeur de la bande qui comprend le deuxième bord longitudinal de la bande, opposé au premier bord longitudinal.

Ainsi, grâce à la réalisation d'une bande multicouche multi matériaux, on s'affranchit des étapes d'usinage longues et délicates - et donc coûteuses, les différentes couches de protection étant déposées simultanément sur la forme par bobinage, et l'on obtient une structure adaptée au besoin du fait de l'emploi de matériaux différents ayant chacun des caractéristiques propres. L'épaisseur de la pièce est ainsi réduite et optimisée, entraînant une augmentation des performances du moteur. Enfin, en permettant la fabrication par bobinage, on obtient une pièce finale orthotrope et on autorise des formes de pièce plus complexes.

Selon une caractéristique particulière de l'invention les première et deuxième couches comprennent en outre un troisième matériau différent des premier et deuxième matériaux et situé entre ces derniers.

Selon une autre caractéristique particulière de l'invention, les couches fibreuses superposées comprennent en outre une troisième couche superposée aux première et deuxième couches, la troisième couche comprenant le premier matériau sur le premier côté et le deuxième matériau sur le deuxième côté, avec recouvrement d'un matériau de la troisième couche avec un matériau différent de la deuxième couche.

Selon une autre caractéristique de l'invention, une couche fibreuse externe est sèche.

Selon une autre caractéristique de l'invention, l'un des côtés de la bande parmi le premier côté et le deuxième côté est pré-imprégné, l'autre côté étant sec.

Selon une autre caractéristique de l'invention, le premier côté et le deuxième côté de la bande sont pré-imprégnés.

Selon une autre caractéristique particulière de l'invention, les couches fibreuses superposées sont des tissus bidimensionnels.

Selon une autre caractéristique particulière de l'invention, les couches fibreuses superposées sont segmentées le long d'une direction longitudinale de la bande avec liaison des segments consécutifs d'une couche par recouvrement par un segment d'une couche adjacente.

Selon une autre caractéristique particulière de l'invention, les couches fibreuses superposées comprennent des fibres en premier matériau sur le premier côté et des fibres en deuxième matériau sur le deuxième côté.

Selon une autre caractéristique particulière de l'invention, les couches fibreuses superposées comprennent une première résine en premier matériau imprégnant des fibres sur le premier côté, et une deuxième résine en deuxième matériau imprégnant des fibres sur le deuxième côté.

Selon une autre caractéristique particulière de l'invention, l'un des premier, deuxième et éventuellement troisième matériaux est un isolant thermique et un autre des premier, deuxième et éventuellement troisième matériaux est un isolant diélectrique.

Selon une autre caractéristique particulière de l'invention, l'un des premier, deuxième et éventuellement troisième matériaux est un premier isolant thermique et un autre des premier, deuxième et éventuellement troisième matériaux est un deuxième isolant thermique différent du premier isolant thermique.

L'invention vise également un procédé de fabrication de la bande multicouche telle que décrite plus haut, comprenant au moins :
- la formation d'un empilement par superposition de la deuxième couche et de la première couche en recouvrant un matériau de la première couche par un matériau différent de la deuxième couche,
- le chauffage de l'empilement des première et deuxième couches à une température au moins égale à la température de ramollissement d'au moins une résine présente dans celles-ci,
- le compactage de l'empilement des première et deuxième couches chauffées de manière à les faire adhérer l'une avec l'autre.

L'invention vise également un procédé de fabrication d'une préforme fibreuse d'une pièce en matériau composite, comprenant au moins le bobinage de la bande multicouche telle que décrite plus haut autour d'une forme.

Selon une caractéristique particulière de l'invention, la préforme fibreuse fabriquée est orthotrope.

L'invention vise également un procédé de fabrication d'une pièce en matériau composite comprenant au moins la fabrication de la préforme fibreuse par mise en oeuvre d'un procédé tel que décrit plus haut et le traitement thermique d'au moins une résine présente dans la préforme de sorte à obtenir une pièce en matériau composite.

Selon une caractéristique particulière de l'invention, la pièce en matériau composite fabriquée est une pièce de moteur fusée.

### Brève description des dessins

[Fig. 1] La figure 1 est une vue schématique et partielle en perspective éclatée d'une bande multicouche multi matériaux comprenant deux couches superposées, conformément à un mode de réalisation de l'invention.
[Fig. 2] La figure 2 est une vue en coupe schématique de la bande de la figure 1 prise transversalement à la direction longitudinale de la bande.
[Fig. 3] La figure 3 est une vue en perspective éclatée de la bande de la figure 1 montrant la disposition des segments et la continuité de matière dans la direction longitudinale.
[Fig. 4] La figure 4 est une vue en coupe schématique d'une perspective éclatée d'une bande multicouche multi matériaux comprenant trois structures fibreuses en des matériaux différents au sein d'une même couche, conformément à un autre mode de réalisation de l'invention.
[Fig. 5] La figure 5 est une vue schématique en perspective éclatée d'une bande multicouche multi matériaux comprenant trois couches superposées, conformément à un autre mode de réalisation de l'invention.
[Fig. 6] La figure 6 est une vue en coupe schématique de la figure 5 prise transversalement à la direction longitudinale de la bande.
[Fig. 7] La figure 7 est un ordinogramme illustrant les étapes d'un procédé de fabrication d'une bande multicouche selon un mode de réalisation de l'invention.
[Fig. 8] La figure 8 est une vue en coupe schématique et partielle d'une préforme fibreuse obtenue après bobinage d'une bande multicouche dans le cadre d'un exemple de procédé selon l'invention, le plan de coupe comprenant l'axe autour duquel la bande a été enroulée.
[Fig. 9] La figure 9 est une vue en coupe schématique de la préforme de la figure 8, le plan de coupe étant perpendiculaire à l'axe autour duquel la bande a été enroulée.

### Description des modes de réalisation

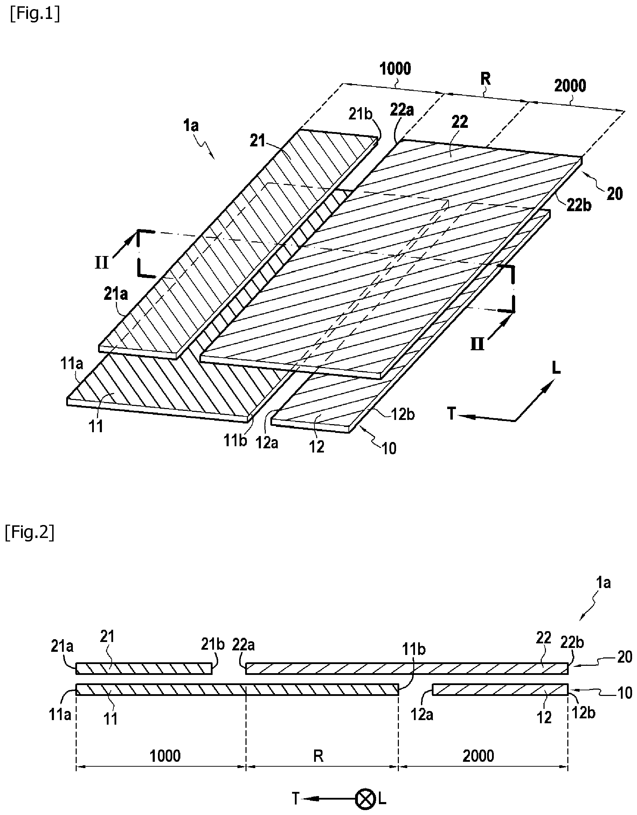

Les figures 1-3 montrent une bande multicouche comprenant deux couches superposées, selon un mode de réalisation de l'invention. Comme il sera détaillé plus loin, cette bande pourra être utilisée pour fabriquer une pièce en matériau composite.

La bande multicouche 1a comprend une première couche 10 comprenant une première structure fibreuse pré-imprégnée 11 comprenant un premier matériau sur un premier côté 1000 de la largeur de la bande 1a, délimitée par deux bords longitudinaux 11a et 11b, et une deuxième structure fibreuse pré-imprégnée 12 comprenant un deuxième matériau sur un deuxième côté 2000 de la largeur de la bande 1a, opposé au premier côté 1000 et délimitée par deux bords longitudinaux 12a et 12b. La bande 1a s'étend selon une direction longitudinale L et la direction T matérialise la direction selon la largeur de la bande 1a (plus grande dimension transversale de la bande 1a). La bande multicouche 1a comprend également une deuxième couche 20 comprenant une première structure fibreuse pré-imprégnée 21 comprenant le premier matériau sur le premier côté 1000 de la largeur de la bande 1a, délimitée par deux bords longitudinaux 21a et 21b, et une deuxième structure fibreuse pré-imprégnée 22 comprenant le deuxième matériau sur le deuxième côté 2000 de la largeur de la bande 1a, délimitée par deux bords longitudinaux 22a et 22b.

La deuxième couche 20 est superposée à la première couche 10, avec un recouvrement du deuxième matériau de la deuxième couche 20 avec le premier matériau de la première couche 10. Il y a recouvrement sur une distance R de la deuxième structure fibreuse 22 de la deuxième couche 20 avec la première structure fibreuse 11 de la première couche 10. Ce recouvrement permet de solidariser la deuxième couche 20 à la première couche 10 sous-jacente. La deuxième structure fibreuse 22 de la deuxième couche 20 recouvre les bords longitudinaux 11b et 12a des structures fibreuses 11 et 12 de la première couche 10.

La distance du recouvrement R est suffisante pour obtenir la cohésion de la bande 1a. Par exemple, la distance du recouvrement est supérieure ou égale à 5 mm, par exemple supérieure ou égale à 10 mm, voire comprise entre 10 mm et 300 mm. Sauf mention contraire, cette distance est mesurée le long de la direction T.

Dans l'exemple décrit ici, les deux couches 10 et 20 sont également superposées de sorte que les bords longitudinaux 11a et 21a soient superposés et que les bords longitudinaux 12b et 22b soient superposés.

Dans cet exemple, les structures fibreuses 11, 12, 21 et 22 sont des tissus bidimensionnels pré-imprégnés de résine, dont l'orientation des fibres est définie selon les contraintes auxquelles sont soumises les structures. Les structures fibreuses peuvent également avoir été réalisées par tissage tridimensionnel, sous réserve que l'épaisseur finale de la bande multicouche 1a permette le bobinage. Enfin, les structures fibreuses peuvent également avoir été réalisées à partir de couches ou nappes unidirectionnelles de fibres (UD).

Les fibres des structures fibreuses 11, 12, 21 et 22 des première et deuxième couches 10 et 20 peuvent être en carbone, en kevlar, en céramique, par exemple en silice, en verre, en carbure de silicium (SiC). Les structures fibreuses 11, 12, 21 et 22 des première et deuxième couches 10 et 20 peuvent être imprégnées d'au moins une résine réticulable, par exemple une résine époxy ou une résine phénolique, ou une résine précurseur de carbone ou de céramique, par exemple de carbure de silicium (SiC).

Selon une première variante, les premières structures fibreuses de la bande sont pré-imprégnées et les deuxièmes structures fibreuses de la bande sont sèches, c'est-à-dire qu'elles ne sont pas pré-imprégnées, ou inversement. Selon une deuxième variante, une couche externe de la bande est sèche, c'est-à-dire qu'elle n'est pas pré-imprégnée, alors que tout ou partie des autres couches constituant la bande sont pré-imprégnées. Une couche externe correspond à une couche définissant une surface supérieure ou inférieure de la bande. L'utilisation de telles textures sèches peut permettre une accroche pour une autre structure tissée ou aiguilletée.

Les deux variantes présentées ci-dessus s'appliquent à l'ensemble des modes de réalisation qui seront décrits ci-après.

Dans cet exemple, les couches fibreuses superposées 10 et 20 comprennent des fibres en premier matériau sur le premier côté 1000 et des fibres en deuxième matériau sur le deuxième côté 2000. En d'autres termes, les fibres des structures fibreuses 11 et 21 sont en premier matériau et les fibres des structures fibreuses 12 et 22 sont en deuxième matériau.

Le premier matériau peut être un isolant thermique et le deuxième matériau un isolant diélectrique. Par exemple, le premier matériau peut comprendre du carbone et le deuxième matériau du verre. Selon une autre variante, le premier matériau peut être un premier isolant thermique et le deuxième matériau un deuxième isolant thermique différent du premier isolant thermique. En particulier, le premier isolant thermique peut être apte à isoler thermiquement une structure sous-jacente vis-à-vis d'un flux thermique à une première température, et le deuxième isolant thermique peut être apte à isoler thermiquement une structure sous-jacente vis-à-vis d'un flux thermique à une deuxième température inférieure ou supérieure à la première température. En variante ou en combinaison, le premier isolant thermique peut présenter une première densité, et le deuxième isolant thermique peut présenter une deuxième densité inférieure ou supérieure à la première densité. L'homme du métier reconnaîtra sans difficulté que d'autres applications sont possibles pour une bande multi matériaux destinée à être bobinée.

Selon une variante, les couches fibreuses superposées 10 et 20 comprennent une première résine en premier matériau imprégnant des fibres sur le premier côté 1000, et une deuxième résine en deuxième matériau imprégnant des fibres sur le deuxième côté 2000. En d'autres termes, la résine imprégnant les structures fibreuses 11 et 21 est en premier matériau et la résine imprégnant les structures fibreuses 12 et 22 est en deuxième matériau. Ainsi, les structures fibreuses 11, 12, 21 et 22 ne sont pas nécessairement imprégnées par la même résine.

La bande multicouche 1a se présente d'un seul tenant. En particulier, il y a continuité et cohésion de matière entre les couches 10 et 20, et notamment continuité de la résine ou des résines entre elles.

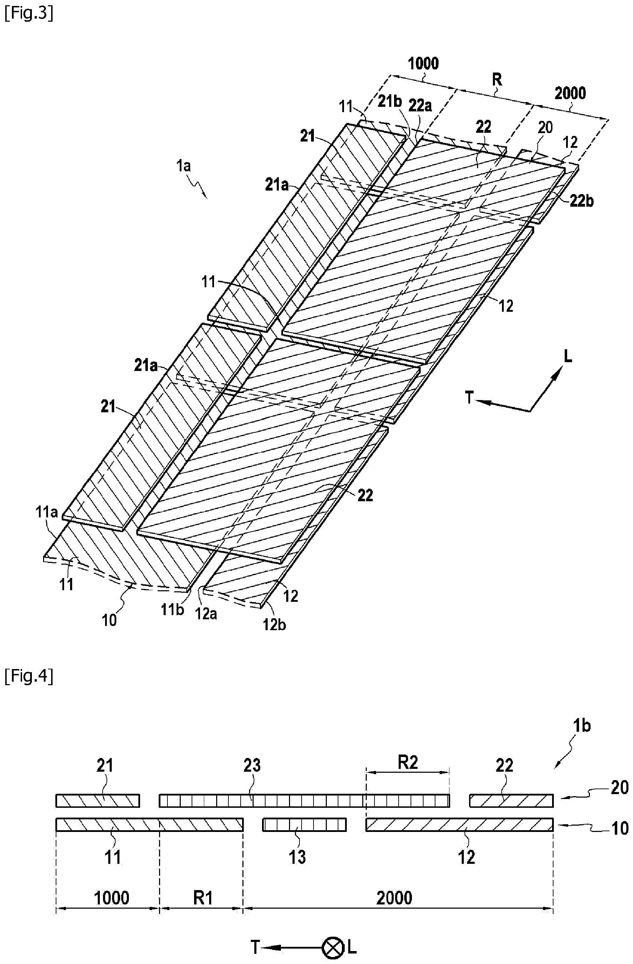

La figure 3 illustre en particulier la continuité de matière de la bande 1a le long de la direction longitudinale L.

Les paires de structures fibreuses 11 et 12, et 21 et 22, forment chacune des segments qui sont répétés le long de la direction longitudinale L. On notera que les bords longitudinaux ou transversaux peuvent ne pas être rectilignes, mais par exemple former une ligne brisée ou une courbe. On peut veiller à ce que les bords longitudinaux 11b et 12a de la première couche 10, et les bords longitudinaux 21b et 22a de la deuxième couche 20 soient suffisamment proches l'un de l'autre, sans nécessairement se toucher. On ne sort pas du cadre de l'invention si ces bords longitudinaux sont en contact. On veillera toutefois à ce que les bords 11b et 12a de la première couche 10, et les bords 21b et 22a de la deuxième couche 20 ne se chevauchent pas l'un l'autre.

La première couche 10 comprend dans sa direction longitudinale L une pluralité de premières structures fibreuses 11 sur le premier côté 1000 ainsi qu'une pluralité de deuxièmes structures fibreuses 12 sur le deuxième côté 2000. La deuxième couche 20 comprend dans sa direction longitudinale L une pluralité de premières structures fibreuses 21 sur le premier côté 1000 ainsi qu'une pluralité de deuxièmes structures fibreuses 22 sur le deuxième côté 2000. Chacune des paires de structures fibreuses 11 et 12, et 21 et 22, est donc un segment de chaque couche fibreuse 10, 20. Les couches fibreuses sont donc segmentées le long de la direction longitudinale L de la bande multicouche. Une première structure fibreuse 21 de la deuxième couche 20 recouvre au moins deux premières structures fibreuses consécutives 11 de la première couche 10 et une deuxième structure fibreuse 22 de la deuxième couche 20 recouvre au moins deux deuxièmes structures fibreuses consécutives 12 de la première couche 10.

Selon un mode particulier de l'invention, chaque couche de la bande multicouche peut comprendre plus que deux structures fibreuses en matériaux différents dans sa largeur, afin d'obtenir un empilement à au moins trois couches de matière superposées une fois le bobinage réalisé.

Par exemple, la figure 4 présente une première couche 10 qui comprend une première structure fibreuse pré-imprégnée 11 comprenant un premier matériau sur un premier côté 1000 de la largeur de la bande 1b, une deuxième structure fibreuse pré-imprégnée 12 comprenant un deuxième matériau différent du premier sur un deuxième côté 2000 de la largeur de la bande 1b opposé au premier côté 1000 et une troisième structure fibreuse pré-imprégnée 13, comprenant un troisième matériau différent du premier, située entre la première structure fibreuse 11 et la deuxième structure fibreuse 12 dans la largeur de la bande 1b. Une deuxième couche 20 superposée à la première couche 10 comprend une première structure fibreuse pré-imprégnée 21 comprenant le premier matériau sur le premier côté 1000, une deuxième structure fibreuse pré-imprégnée 22 comprenant le deuxième matériau sur le deuxième côté 2000 et une troisième structure fibreuse pré-imprégnée 23 en troisième matériau située entre la première structure fibreuse 21 et la deuxième structure fibreuse 22, avec recouvrement d'une distance R1 de la troisième structure fibreuse 23 de la deuxième couche 20 avec la première structure fibreuse 11 de la première couche 10, et avec recouvrement d'une distance R2 de la troisième structure fibreuse 23 de la deuxième couche 20 avec la deuxième structure fibreuse 12 de la première couche 10 ou recouvrement de la deuxième structure fibreuse de la deuxième couche avec la troisième structure fibreuse de la première couche (variante non illustrée).

On peut avoir recouvrement du troisième matériau de l'une au moins des première et deuxième couches avec le premier matériau et le deuxième matériau de l'autre des première et deuxième couches. Dans l'exemple illustré à la figure 4, il y a recouvrement du troisième matériau de la deuxième couche 20 avec les premier et deuxième matériaux de la première couche 10.

Ces recouvrements permettent de solidariser la deuxième couche 20 à la première couche 10 sous-jacente. Les distances de recouvrement R1 et R2 dans cet exemple peuvent être telles que décrites plus haut.

Selon un exemple, le troisième matériau peut être un matériau d'interposition assurant la compatibilité entre les premier et deuxième matériaux, par exemple dans le cas où ces derniers seraient incompatibles chimiquement.

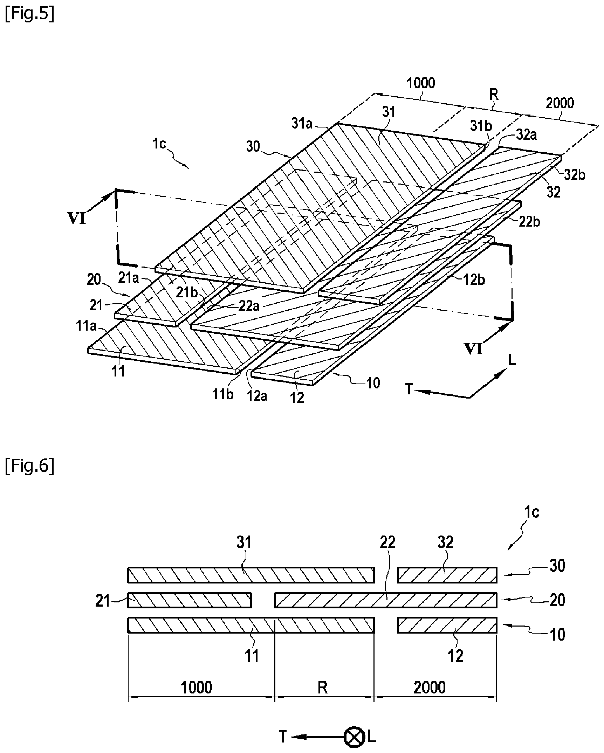

Les figures 5 et 6 montrent une bande multicouche 1c comprenant trois couches 10, 20 et 30 superposées, selon un autre mode de réalisation de l'invention. Comme il sera détaillé plus loin, cette bande 1c pourra être utilisée pour fabriquer une pièce en matériau composite. Une configuration à au moins trois couches 10, 20 et 30 est avantageuse car elle confère une meilleure tenue à la bande 1c du fait d'un double recouvrement, et permet un gain sur le bobinage subséquent du fait d'un accroissement de matière déposée à chaque tour.

La bande multicouche 1c reprend ici la structure de la bande multicouche 1a détaillée dans les figures 1-3. La bande multicouche 1c comprend, en plus de l'empilement des deux couches 10 et 20 décrit précédemment, une troisième couche 30 comprenant une première structure fibreuse pré-imprégnée 31 comprenant le premier matériau sur le premier côté 1000 de la largeur de la bande 1c, délimitée par deux bords longitudinaux 31a et 31b, et une deuxième structure fibreuse pré-imprégnée 32 comprenant le deuxième matériau sur le deuxième côté 2000 de la largeur de la bande 1c, délimitée par deux bords longitudinaux 32a et 32b.

La troisième couche 30 est superposée à la deuxième couche 20, avec un recouvrement sur une distance R d'une des structures fibreuses de la troisième couche 30 comprenant l'un des premier et deuxième matériaux, avec une structure fibreuse de la deuxième couche 20 comprenant l'autre des premier et deuxième matériaux. Dans cet exemple, la superposition des deuxième et troisième couches 20 et 30 se fait par recouvrement sur une distance R de la première structure fibreuse 31 de la troisième couche 30 avec la deuxième structure fibreuse 22 de la deuxième couche 20. Ce recouvrement permet de solidariser la troisième couche 30 à la deuxième couche 20 sous-jacente. La structure fibreuse 31 de la troisième couche 30 recouvre les bords longitudinaux 21b et 22a des structures fibreuses 21 et 22 de la deuxième couche 20. On pourrait, dans une variante non illustrée, avoir un recouvrement de la deuxième structure fibreuse 32 de la troisième couche 30 avec la première structure fibreuse 21 de la deuxième couche 20.

La distance de recouvrement R est suffisante pour obtenir la cohésion de la bande 1c et peut être telle que décrite plus haut par paire de couches consécutives dans la direction de l'empilement. Dans cet exemple, la distance de recouvrement R est identique entre la première couche 10 et la deuxième couche 20, et entre la deuxième couche 20 et la troisième couche 30. La distance de recouvrement entre la première et la deuxième couche peut différer de la distance de recouvrement entre la deuxième et la troisième couche, tant que les distances de recouvrement sont suffisantes pour obtenir une bande 1c cohésive.

Dans l'exemple décrit ici, les trois couches sont également superposées de sorte que les bords longitudinaux 11a, 21a et 31a soient superposés et que les bords longitudinaux 12b, 22b et 32b soient superposés.

Les structures fibreuses 31 et 32 forment chacune des segments qui sont répétés le long de la direction longitudinale L, de manière similaire à ce qui est illustré à la figure 3. On notera que les bords longitudinaux ou transversaux peuvent ne pas être rectilignes, mais par exemple former une ligne brisée ou une courbe. On peut veiller à ce que les bords longitudinaux 31b et 32a de la troisième couche 30 soient suffisamment proches l'un de l'autre, sans nécessairement se toucher. On ne sort pas du cadre de l'invention si ces bords longitudinaux sont en contact. On veillera toutefois à ce que les bords 31b et 32a de la troisième couche 30 ne se chevauchent pas l'un l'autre.

Les structures fibreuses 31 et 32 de la troisième couche 30 ont la même structure que les structures fibreuses 11, 12, 21 et 22 des première et deuxième couches 10 et 20. Comme les structures fibreuses 11, 12, 21 et 22 des première et deuxième couches 10 et 20, les fibres des structures fibreuses 31 et 32 de la troisième couche 30 peuvent être en carbone, en kevlar, en céramique, par exemple en silice, en verre, en carbure de silicium (SiC). Les structures fibreuses 31 et 32 de la troisième couche 30 peuvent être imprégnées d'au moins une résine réticulable, par exemple une résine époxy ou une résine phénolique, ou une résine précurseur de carbone ou de carbure de silicium (SiC).

Dans cet exemple, les trois couches fibreuses superposées comprennent des fibres en premier matériau sur le premier côté 1000 et des fibres en deuxième matériau sur le deuxième côté 2000. Le premier matériau peut être un isolant thermique et le deuxième matériau un isolant diélectrique. Par exemple, le premier matériau peut comprendre du carbone et le deuxième matériau du verre. En variante, le premier et le deuxième matériaux peuvent être des isolants thermiques, comme décrit plus haut. L'homme du métier reconnaîtra sans difficulté que d'autres combinaisons de matériaux sont possibles pour une bande multi matériaux destinée à être bobinée.

Selon une variante, les trois couches fibreuses superposées comprennent une première résine en premier matériau imprégnant des fibres sur le premier côté 1000, et une deuxième résine en deuxième matériau imprégnant des fibres sur le deuxième côté 2000.

La bande multicouche 1c se présente d'un seul tenant. En particulier, il y a continuité et cohésion de matière entre les couches 10, 20 et 30, et notamment continuité de la résine ou des résines entre elles.

On a décrit des exemples de bandes à deux ou trois couches superposées mais on ne sort, bien entendu, pas du cadre de l'invention si les bandes comprennent plus de trois couches superposées. Dans ce cas, les recouvrements entre les couches adjacentes peuvent être alternés comme illustré à la figure 5.

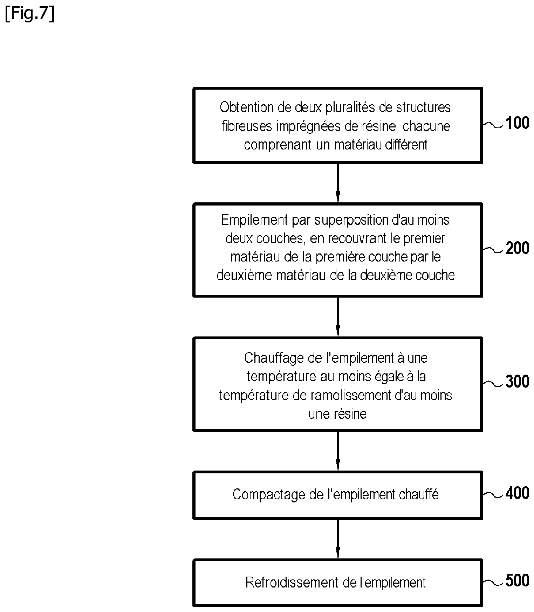

Un procédé de fabrication d'une bande multicouche selon l'invention va maintenant être décrit en lien avec l'ordinogramme de la figure 7.

Une première étape 100 consiste à obtenir deux pluralités de structures fibreuses pré-imprégnées de résine(s), chaque pluralité comprenant un matériau différent. On ne sort pas du cadre de l'invention si on utilise des pluralités de structures fibreuses supplémentaires comprenant encore d'autres matériaux différents.

Dans cet exemple, les structures fibreuses sont des tissus bidimensionnels. Cependant, on ne sort pas du cadre de l'invention si les structures fibreuses ont une structure différente, comme évoqué dans les précédents modes de réalisation. Les matériaux possibles pour réaliser ces structures fibreuses sont également décrits dans les précédents modes de réalisation.

Une deuxième étape 200 consiste à réaliser des couches à partir des structures fibreuses créées précédemment et à les empiler par superposition comme décrit dans les précédents modes de réalisation. Ainsi, l'empilement comprend au minimum les deux couches 10, 20 décrites sur les figures 1-3.

Dans une troisième étape 300 on chauffe l'empilement réalisé à l'étape 200 à une température au moins égale à la température de ramollissement d'au moins une résine contenue dans l'empilement. Puis, dans une étape 400 on va compacter l'empilement ainsi chauffé pour faire adhérer les couches empilées entre elles. La résine ramollie peut ainsi faire faire adhérer les couches entre elles. On notera que la température de ramollissement est une température à laquelle la résine se liquéfie légèrement sans polymériser ou réticuler. Les étapes de chauffage 300 et de compactage 400 peuvent être réalisées simultanément, dans une presse chauffante par exemple.

Une possibilité pour réaliser les étapes 200, 300 et 400 est d'utiliser un dispositif tel que décrit dans le document EP3418046, comprenant un convoyeur, deux dispositifs de chargement et une presse chauffante, ou comprenant une étape de placement des couches robotisée.

Dans l'étape 500 on refroidit l'empilement ainsi chauffé et compacté de façon à obtenir une bande multicouche destinée à être bobinée.

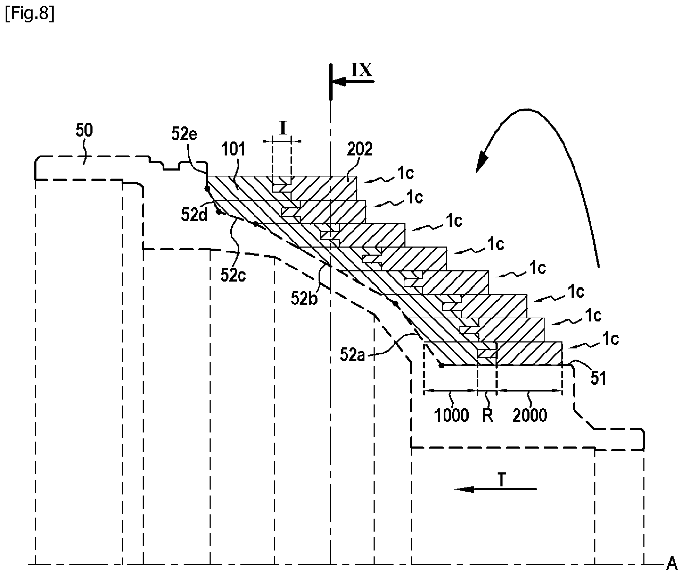

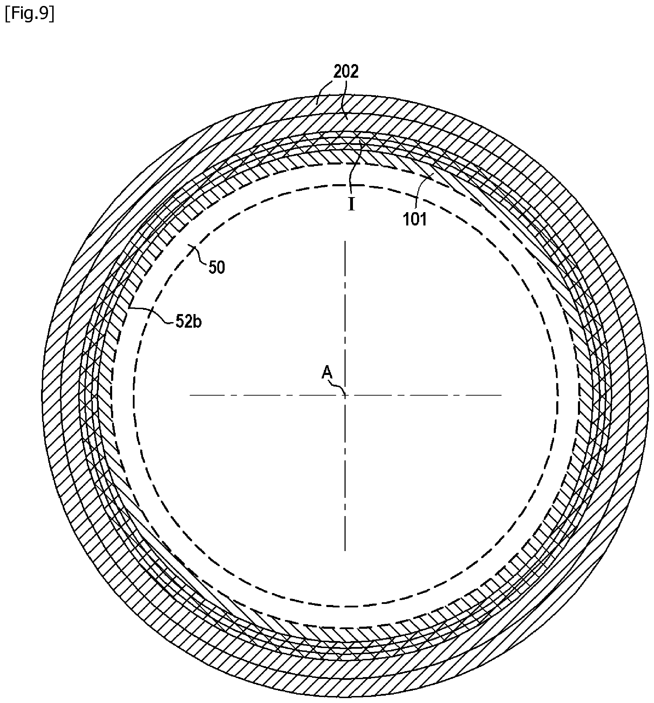

Les figures 8 et 9 schématisent une préforme fibreuse obtenue après bobinage d'une bande multicouche dans le cadre d'un exemple de procédé selon l'invention, dans le cas où la surface à bobiner est développable.

La bande multicouche 1c est mise en oeuvre par bobinage autour d'un outillage de bobinage 50, d'axe de révolution A qui est également l'axe de bobinage. Comme décrit précédemment, la bande multicouche 1c possède des structures fibreuses comprenant le premier matériau 101 sur le premier côté 1000 et des structures fibreuses comprenant le deuxième matériau 202 sur le deuxième côté 2000.

On commence à enrouler la bande multicouche 1c sur la surface 51, la direction transversale T de la bande multicouche 1c étant dirigée selon l'axe de révolution A. On enroule ensuite la bande multicouche 1c autour l'axe de révolution A en se déplaçant vers la surface opposée 52e, c'est-à-dire vers la gauche sur le dessin jusqu'à recouvrir les surfaces 52a, 52b, 52c et 52d de l'outillage 50.

Dans l'exemple présenté sur les figures 8 et 9, la surface à bobiner est développable. Dans le cas d'une surface à bobiner présentant des parties non-développables et dont les surfaces forment un angle non nul avec l'axe de révolution, on peut utiliser le procédé de bobinage décrit dans le document EP3492249A1 en mettant en oeuvre la bande multicouche de l'invention autour de l'outillage de bobinage non-développable.

Les orientations des fibres dans la bande multicouche peuvent être adaptées au bobinage réalisé. Par exemple, l'homme du métier saura comment adapter au bobinage réalisé l'orientation des fibres dans la bande multicouche dans le cas de structures fibreuses unidirectionnelles ou bidirectionnelles.

On obtient ainsi directement en une seule étape d'enroulement une préforme avec empilement des matériaux 101 et 202, avec une zone de transition 1 où les matériaux 101 et 202 sont présents, comme visible sur la figure 8 et sur la coupe de la figure 9. La pièce peut alors être obtenue par traitement thermique de la préforme obtenue, par exemple afin de faire polymériser ou réticuler les résines(s) présentes.

En outre, ce procédé permet de réaliser une préforme orthotrope par enroulement de la bande multicouche 1c.

On peut ainsi fabriquer une pièce de moteur-fusée, telle qu'un divergent de moteur-fusée.

L'expression « comprise entre ... et ... » doit se comprendre comme incluant les bornes.

## Revendications

1. Bande multicouche (1a ; 1b ; 1c) destinée à être bobinée sur une forme pour la fabrication d'une pièce en matériau composite, comprenant des couches fibreuses superposées dont au moins une de ces couches est pré-imprégnée, lesdites couches fibreuses superposées comprenant au moins :
- une première couche (10) comprenant un premier matériau (11) sur un premier côté (1000) de la largeur de la bande et un deuxième matériau (12), différent du premier matériau (11), sur un deuxième côté (2000) de la largeur de la bande, opposé au premier côté (1000), et
- une deuxième couche (20) superposée à la première couche et comprenant le premier matériau (21) sur le premier côté (1000) et le deuxième matériau (22) sur le deuxième côté (2000), avec recouvrement d'un matériau (22) de la deuxième couche (20) avec un matériau différent (11) de la première couche (10).

2. Bande multicouche (1b) selon la revendication 1, dans laquelle les première (10) et deuxième (20) couches comprennent en outre un troisième matériau (13 ; 23) différent des premier (11 ; 21) et deuxième (12 ; 22) matériaux et situé entre ces derniers.

3. Bande multicouche (1c) selon la revendication 1 ou 2, dans laquelle les couches fibreuses superposées comprennent en outre une troisième couche (30) superposée aux première (10) et deuxième (20) couches, la troisième couche fibreuse comprenant le premier matériau (31) sur le premier côté (1000) et le deuxième matériau (32) sur le deuxième côté (2000), avec recouvrement d'un matériau de la troisième couche (30) avec un matériau différent de la deuxième couche (20).

4. Bande multicouche (1a ; 1b ; 1c) selon l'une quelconque des revendications 1 à 3, dans laquelle une couche fibreuse externe est sèche.

5. Bande multicouche (1a ; 1b ; 1c) selon l'une quelconque des revendications 1 à 4, dans laquelle l'un des côtés de la bande parmi le premier côté (1000) et le deuxième côté (2000) est pré-imprégné, l'autre côté étant sec.

6. Bande multicouche (1a ; 1b ; 1c) selon l'une quelconque des revendications 1 à 4, dans laquelle le premier côté (1000) et le deuxième côté (2000) de la bande sont pré-imprégnés.

7. Bande multicouche (1a ; 1b ; 1c) selon l'une quelconque des revendications 1 à 6, dans laquelle les couches fibreuses superposées sont des tissus bidimensionnels.

8. Bande multicouche (1a ; 1b ; 1c) selon l'une quelconque des revendications 1 à 7, dans laquelle les couches fibreuses superposées sont segmentées le long d'une direction longitudinale (L) de la bande avec liaison des segments consécutifs d'une couche par recouvrement par un segment d'une couche adjacente.

9. Bande multicouche (1a ; 1b ; 1c) selon l'une quelconque des revendications 1 à 8, dans laquelle les couches fibreuses superposées comprennent des fibres en premier matériau sur le premier côté (1000) et des fibres en deuxième matériau sur le deuxième côté (2000).

10. Bande multicouche (1a ; 1b ; 1c) selon l'une quelconque des revendications 6 ou 7 à 9 rattachées à la revendication 6, dans laquelle les couches fibreuses superposées comprennent une première résine en premier matériau imprégnant des fibres sur le premier côté (1000), et une deuxième résine en deuxième matériau imprégnant des fibres sur le deuxième côté (2000).

11. Bande multicouche (1a ; 1b ; 1c) selon l'une quelconque des revendications 1 à 10, dans laquelle l'un des premier, deuxième et éventuellement troisième matériaux est un isolant thermique et un autre des premier, deuxième et éventuellement troisième matériaux est un isolant diélectrique.

12. Bande multicouche (1a ; 1b ; 1c) selon l'une quelconque des revendications 1 à 11, dans laquelle l'un des premier, deuxième et éventuellement troisième matériaux est un premier isolant thermique et un autre des premier, deuxième et éventuellement troisième matériaux est un deuxième isolant thermique différent du premier isolant thermique.

13. Procédé de fabrication d'une préforme fibreuse d'une pièce en matériau composite, comprenant au moins le bobinage de la bande multicouche (1a ; 1b ; 1c) selon l'une quelconque des revendications 1 à 12 autour d'une forme.

14. Procédé de fabrication d'une pièce en matériau composite comprenant au moins la fabrication d'une préforme fibreuse par mise en oeuvre d'un procédé selon la revendication 13, et le traitement thermique d'au moins une résine présente dans la préforme de sorte à obtenir la pièce en matériau composite.

15. Procédé selon la revendication 14, dans lequel la pièce est une pièce de moteur fusée.

## Patentansprüche

1. Mehrlagiges Band (1a; 1b; 1c), das dazu bestimmt ist, um eine Form zur Fertigung eines Teils aus Verbundmaterial herumgewickelt zu werden, und übereinandergelegte faserige Lagen umfasst, wobei von diesen Lagen zumindest eine vorimprägniert ist und die übereinandergelegten faserigen Lagen zumindest umfassen:
- eine erste Lage (10), die ein erstes Material (11) auf einer ersten Seite (1000) der Breite des Bandes und ein zweites Material (12), das sich von dem ersten Material (11) unterscheidet, auf einer zweiten Seite (2000) der Breite des Bandes umfasst, die der ersten Seite (1000) gegenüberliegt, und
- eine zweite Lage (20), die über die erste Lage gelegt ist und das erste Material (21) auf der ersten Seite (1000) und das zweite Material (22) auf der zweiten Seite (2000) umfasst, unter Abdeckung eines Materials (22) der zweiten Lage (20) mit einem unterschiedlichen Material (11) der ersten Lage (10).

2. Mehrlagiges Band (1b) nach Anspruch 1, wobei die erste (10) und zweite (20) Lage ferner ein drittes Material (13; 23) umfassen, das sich von dem ersten (11; 21) und zweiten (12; 22) Material unterscheidet und sich zwischen den beiden letztgenannten befindet.

3. Mehrlagiges Band (1c) nach Anspruch 1 oder 2, wobei die übereinandergelegten faserigen Lagen ferner eine dritte Lage (30) umfassen, die über die erste (10) und zweite (20) Lage gelegt ist, wobei die dritte faserige Lage das erste Material (31) auf der ersten Seite (1000) und das zweite Material (32) auf der zweiten Seite (2000) umfasst, unter Abdeckung eines Materials der dritten Lage (30) mit einem unterschiedlichen Material der zweiten Lage (20).

4. Mehrlagiges Band (1a; 1b; 1c) nach einem der Ansprüche 1 bis 3, wobei eine äußere faserige Lage trocken ist.

5. Mehrlagiges Band (1a; 1b; 1c) nach einem der Ansprüche 1 bis 4, wobei eine der Seiten des Bandes von der ersten Seite (1000) und der zweiten Seite (2000) vorimprägniert ist, wobei die zweite Seite trocken ist.

6. Mehrlagiges Band (1a; 1b; 1c) nach einem der Ansprüche 1 bis 4, wobei die erste Seite (1000) und die zweite Seite (2000) des Bandes vorimprägniert sind.

7. Mehrlagiges Band (1a; 1b; 1c) nach einem der Ansprüche 1 bis 6, wobei die übereinandergelegten faserigen Lagen zweidimensionale Gewebe sind.

8. Mehrlagiges Band (1a; 1b; 1c) nach einem der Ansprüche 1 bis 7, wobei die übereinandergelegten faserigen Lagen entlang einer Längsrichtung (L) des Bandes segmentiert sind, mit einer Verbindung von aufeinanderfolgenden Segmenten einer Lage durch Abdeckung mit einem Segment einer benachbarten Lage.

9. Mehrlagiges Band (1a; 1b; 1c) nach einem der Ansprüche 1 bis 8, wobei die übereinandergelegten faserigen Lagen Fasern aus dem ersten Material auf der ersten Seite (1000) und Fasern aus dem zweiten Material auf der zweiten Seite (2000) umfassen.

10. Mehrlagiges Band (1a; 1b; 1c) nach einem der Ansprüche 6 oder 7 bis 9, sofern abhängig von Anspruch 6, wobei die übereinandergelegten faserigen Lagen ein erstes Harz aus einem ersten Material, das die Fasern auf der ersten Seite (1000) imprägniert, und ein zweites Harz aus einem zweiten Material umfassen, das die Fasern auf der zweiten Seite (2000) imprägniert.

11. Mehrlagiges Band (1a; 1b; 1c) nach einem der Ansprüche 1 bis 10, wobei eines von dem ersten, zweiten und gegebenenfalls dritten Material ein Wärmeisolator ist und ein weiteres von dem ersten, zweiten und gegebenenfalls dritten Material ein dielektrischer Isolator ist.

12. Mehrlagiges Band (1a; 1b; 1c) nach einem der Ansprüche 1 bis 11, wobei eines von dem ersten, zweiten und gegebenenfalls dritten Material ein erster Wärmeisolator ist und ein weiteres von dem ersten, zweiten und gegebenenfalls dritten Material ein zweiter Wärmeisolator ist, der sich von dem ersten Wärmeisolator unterscheidet.

13. Verfahren zur Herstellung einer Faservorform eines Teils aus Verbundmaterial, umfassend zumindest das Herumwickeln des mehrlagigen Bandes (1a; 1b; 1c) nach einem der Ansprüche 1 bis 12 um eine Form.

14. Verfahren zur Herstellung eines Teils aus Verbundmaterial, umfassend zumindest die Herstellung einer Faservorform durch Durchführen eines Verfahrens nach Anspruch 13, und die Wärmebehandlung zumindest eines Harzes, das in der Vorform vorliegt, auf eine Weise, um den Teil aus Verbundmaterial zu erhalten.

15. Verfahren nach Anspruch 14, wobei der Teil ein Teil eines Raketenantriebs ist.

## Claims

1. A multilayer strip (1a; 1b; 1c) intended to be wound on a form to manufacture a part in composite material, comprising superposed fibrous layers, at least one of these layers being pre-impregnated, said superposed fibrous layers comprising at least:
- a first layer (10) comprising a first material (11) on a first side (1000) of the width of the strip, and a second material (12), differing from the first material (11), on a second side (2000) of the width of the strip opposite the first side (1000), and
- a second layer (20) superposed on the first layer and comprising the first material (21) on the first side (1000) and the second material (22) on the second side (2000), with overlapping of a material (22) of the second layer (20) over a different material (11) of the first layer (10).

2. The multilayer strip (1b) according to claim 1, wherein the first (10) and second (20) layers further comprise a third material (13; 23) differing from the first (11; 21) and second (12; 22) materials and positioned therebetween.

3. The multilayer strip (1c) according to claim 1 or 2, wherein the superposed fibrous layers further comprise a third layer (30) superposed on the first (10) and second (20) layers, the third fibrous layer comprising the first material (31) on the first side (1000) and the second material (32) on the second side (2000), with overlapping of a material of the third layer (30) over a different material of the second layer (20).

4. The multilayer strip (1a; 1b; 1c) according to any of claims 1 to 3, wherein an outer fibrous layer is dry.

5. The multilayer strip (1a; 1b; 1c) according to any of claims 1 to 4, wherein one of the sides of the strip among the first side (1000) and second side (2000) is pre-impregnated, the other side being dry.

6. The multilayer strip (1a; 1b; 1c) according to any of claims 1 to 4, wherein the first side (1000) and second side (2000) of the strip are pre-impregnated.

7. The multilayer strip (1a; 1b; 1c) according to any of claims 1 to 6, wherein the superposed fibrous layers are two-dimensional fabrics.

8. The multilayer strip (1a; 1b; 1c) according to any of claims 1 to 7, wherein the superposed fibrous layers are segmented along a longitudinal direction (L) of the strip with joining of the consecutive segments of one layer via overlapping by a segment of an adjacent layer.

9. The multilayer strip (1a; 1b; 1c) according to any of claims 1 to 8, wherein the superposed fibrous layers comprise fibres in first material on the first side (1000) and fibres in second material on the second side (2000).

10. The multilayer strip (1a; 1b; 1c) according to any of claims 6 or 7 to 9 attached to claim 6, wherein the superposed fibrous layers comprise a first resin in first material impregnating fibres on the first side (1000), and a second resin in second material impregnating fibres on the second side (2000).

11. The multilayer strip (1a; 1b; 1c) according to any of claims 1 to 10, wherein one of the first, second and optional third materials is a thermal insulator and another of the first, second and optional third materials is a dielectric insulator.

12. The multilayer strip (1a; 1b; 1c) according to any of claims 1 to 11, wherein one of the first, second and optional third materials is a first thermal insulator and another of the first, second and optional third materials is a second thermal insulator differing from the first thermal insulator.

13. A method for manufacturing a fibrous preform of a part in composite material, comprising at least the winding of the multilayer strip (1a; 1b; 1c) according to any of claims 1 to 12 around a form.

14. A method for manufacturing a part in composite material comprising at least the manufacture of a fibrous preform by implementing a method according to claim 13, and heat treating at least one resin present in the preform to obtain the part in composite material.

15. The method according to claim 14, wherein the part is a rocket engine part.
